Europäisches Patentamt

European Patent Office

Office européen des brevets

(19)

(11) Veröffentlichungsnummer: **0 333 709 B1**

## (12) EUROPÄISCHE PATENTSCHRIFT

(45) Veröffentlichungstag der Patentschrift: **02.12.92**

(51) Int. Cl.⁵: **G02F 1/133**

(21) Anmeldenummer: **87905189.4**

(22) Anmeldetag: **21.08.87**

(86) Internationale Anmeldenummer:
**PCT/DE87/00373**

(87) Internationale Veröffentlichungsnummer:
**WO 88/03663 (19.05.88 88/11)**

(54) **ANZEIGEGERÄT MIT FLÜSSIGKRISTALLZELLE, VORZUGSWEISE FÜR KRAFTFAHRZEUGE.**

(30) Priorität: **14.11.86 DE 3639008**

(43) Veröffentlichungstag der Anmeldung:
**27.09.89 Patentblatt 89/39**

(45) Bekanntmachung des Hinweises auf die
Patenterteilung:
**02.12.92 Patentblatt 92/49**

(84) Benannte Vertragsstaaten:
**DE FR GB IT SE**

(56) Entgegenhaltungen:
**EP-A- 0 140 350**
**EP-A- 0 198 115**
**DE-A- 3 313 288**
**FR-A- 2 447 582**
**US-A- 4 059 916**

(73) Patentinhaber: **ROBERT BOSCH GMBH**
**Postfach 30 02 20**
**W-7000 Stuttgart 30(DE)**

(72) Erfinder: **FABRY, Ehrenfried**
**Neue Gasse 3**
**W-8500 Nürnberg 1(DE)**
Erfinder: **GODDARD, Georg**
**Kleestrasse 9**
**W-8508 Wendelstein(DE)**
Erfinder: **MEYER, Dieter**
**Industriestrasse 15**
**W-8501 Feucht(DE)**
Erfinder: **PETERMANN, Hans**
**Klintstrasse 6c**
**W-8500 Nürnberg(DE)**
Erfinder: **PIRKL, Bernhard**
**Lange Zeile 5**
**W-8500 Nürnberg 90(DE)**
Erfinder: **WIEDEMANN, Werner**
**Von Weber Strasse 69**
**W-8522 Herzogenaurach(DE)**

## Beschreibung

Stand der Technik

Die Erfindung geht aus von einem Anzeigegerät für Meßwerte, Störanzeigen und dgl. auf mindestens einer transmissiven Flüssigkristallzelle, vorzugsweise in Kraftfahrzeugen nach der Gattung des Hauptanspruchs.

Bei einem bekannten Anzeigegerät dieser Art werden Bereiche der Flüssigkristallzelle mit unterschiedlicher Farbgebung der Schriften und Symbole bzw. der anzuzeigenden Informationen durch Farbfolien erreicht, welche zwischen der Flüssigkristallzelle und einem dahinter angeordneten Transflektor eingesetzt werden, so daß sowohl bei hellem Umgebungslicht als auch bei Dunkelheit eine gute Farbgebung erreicht wird (Elektronik, 1983, Heft 19, Seite 16). Bekannt ist ferner bei Verwendung transmissiver LCDs in den Bereichen mit unterschiedlicher Farbgebung einen entsprechenden Farbaufdruck an der Rückseite der LCD anzubringen. Dies ist insbesondere bei Flüssigkristall-Großdisplays in Kraftfahrzeugen dort erwünscht, wo Warn- oder Störanzeigen gegenüber anderen Anzeigen wie Uhrzeit, Geschwindigkeit; Motordrehzahl und dgl. durch unterschiedliche Farbgebung herausgehoben werden sollen.

Bei den bekannten Lösungen ist es jedoch nachteilig, daß jeder Bereich der LCD mit nur einer ihm zugeordneten Farbgebung versehen werden kann. Werden bei verschiedenen Fahrzeugtypen jeweils andere Farbgebungen der verschiedenen Bereiche der LCD gewünscht, so ist es erforderlich, ein entsprechend großes Sortiment von Flüssigkristallzellen bereitzuhalten, was einen erheblichen Aufwand an Lagerhaltung erfordert. Nachteilig ist ferner, daß die durch Folien oder Farbdruck erzeugte unterschiedliche Farbgebung sich auch auf die nicht angesteuerten, gesperrten Flächenbereiche der LCD auswirkt, so daß sich dort eine unerwünschte farblich und in der Stärke unterschiedliche Grundhelligkeit ergibt.

In der FR-A-2 447 582 wird eine Anzeigevorrichtung für Instrumente in Kraftfahrzeuge vorgeschlagen, bei der mittels eines Lichtleiters das Licht einer Lichtquelle eine Flüssigkristallzelle durchleuchtet. Durch Farbfilter, die zwischen der Lichtquelle und dem Lichtleiter angeordnet sind, ist die Flüssigkristallzelle in einer gewünschten Farbe beleuchtbar. Mit dieser Anordnung ist eine farbliche Gestaltung von Bereichen einer Flüssigkristallanzeige möglich. Allerdings ergibt sich dadurch keine gleichmäßige Grundhelligkeit der Flüssigkristallanzeige von nicht angesteuerten Bereichen. Die gleichmäßige Ausleuchtung und die freie farbliche Gestaltung von Bereichen der Flüssigkristallanzeige sind jedoch häufig gewünschte Parameter.

Mit der vorliegenden Lösung wird angestrebt, eine frei wählbare Farbgebung an verschiedenen Bereichen der LCD und gleichzeitig eine gleichmäßige Grundhelligkeit der LCD unabhängig von der Farbgebung zu gewährleisten.

Vorteile der Erfindung

Die erfindungsgemäße Ausbildung des Anzeigegerätes mit den kennzeichnenden Merkmalen des Hauptanspruchs hat den Vorteil, daß die Bereiche der LCD mit unterschiedlicher Farbgebung durch die Anordnung mindestens eines Lichtleiters an der Rückseite eines Bereiches gegen einander abgegrenzt und durch verschieden farbige Lichtquellen ausgeleuchtet werden können. Die gewünschte Farbgebung ist hier frei wählbar, da erst nach der Montage des Anzeigegerätes mit dem Einsetzen der Lichtquellen in den einzelnen Bereichen der LCD die gewünschte Farbgebung erfolgt. Ein weiterer Vorteil besteht darin, daß durch bekannte Maßnahmen, wie beispielsweise die Anordnung von Streufolien und fluoreszierenden Scheiben, Rasterdruck und dgl. eine gleichmäßige Grundhelligkeit in den gesperrten Flächenbereichen der LCD möglich ist und daß eine gleichmäßige Transmission des Lichtes in den angesteuerten Flächensegmenten der LCD erzielt wird. Der Übergang der Farben zwischen den Bereichen unterschiedlicher Farbgebung kann auf diese Weise so weich sein, daß sich dadurch ein sehr gutes optisches Erscheinungsbild ergibt.

Durch die in den Unteransprüchen ausgeführten Maßnahmen sind vorteilhafte Weiterbildungen und Verbesserungen der im Hauptanspruch angegebenen Merkmale möglich. Besonders vorteilhaft ist es, am hinteren Endbereich des Lichtleiters mehrere Lichtquellen von unterschiedlicher Farbe anzuordnen, um in einem Bereich der LCD durch Umschalten der Glühlampen ein Wechsel der Farbe zu ermöglichen. Dadurch ist es ferner möglich, für eine einheitliche Grundhelligkeit der LCD eine Glühlampe mit weißem Licht vorzusehen. Ist der Bereich beispielsweise für Funktions- und Zustandsanzeigen verschiedener Einrichtungen im Fahrzeug vorgesehen, so ist es vorteilhaft, zur Anzeige normaler Werte und Funktionen eine grüne Lampe einzuschalten. Bei Anzeige von Störungen ist dagegen eine rote Lampe für diesen Bereich der LCD einzuschalten, wobei beispielsweise die Störanzeige durch intermittierendes Aufleuchten der gestörten Funktion auf der LCD kenntlich gemacht wird.

Die Verwendung von Lichtleitern zur Ausleuchtung der LCD hat außerdem den Vorteil, daß die Lichtquellen seitlich neben, hinter oder außerhalb des Anzeigegerätes angeordnet werden können, so daß der Platzbedarf für die Ausleuchtung der LCD sehr gering ist und damit den konstruktiven Aufbau des Anzeigegerätes nicht unnötig beeinträchtigt. Eine besonders flach bauende Ausführung läßt sich dadurch realisieren, daß der Lichtleiter hinter der LCD keilförmig ausgebildet ist und die farbigen Lichtquellen an derjenigen Seite des Lichtleiters mit dem dickeren Endbereich angeordnet sind. Besonders vorteilhaft ist es, wenn die LCD an ihrer Rückseite an zwei benachbarten Bereichen unterschiedlicher Farbgebung zwei benachbarte, keilförmig ausgebildete Lichtleiter aufweist, deren Lichtquellen an zwei einander gegenüberliegenden Seiten der LCD angeordnet sind. Da die Bereiche unterschiedlicher Farbgebung der LCD sehr unterschiedlich groß sein können, kann es besonders zweckmäßig sein, den kleineren Bereich über einen Lichtleiter und den größeren Bereich der LCD durch eine in einem Lichtschacht hinter der LCD angeordneten Glühlampe auszuleuchten. Dabei ist es vorteilhaft, zur Erzielung einer gleichmäßigen Grundhelligkeit der LCD den Lichtleiter hinter dem benachbarten, verschiedenfarbig auszuleuchtenden Bereich der LCD so auszubilden, daß ein Teil des Lichtes von der Glühlampe im Lichtschacht in einem hinteren Endbereich des Lichtleiters eintritt und an dem vom Lichtleiter abgedeckten Bereich der LCD wieder austritt. Zweckmäßigerweise ist dabei der Lichtleiter mit Ausnahme der Einkoppel- und Auskoppelflächen des Lichtes mit einer reflektierenden Schicht bedeckt.

Zeichnung

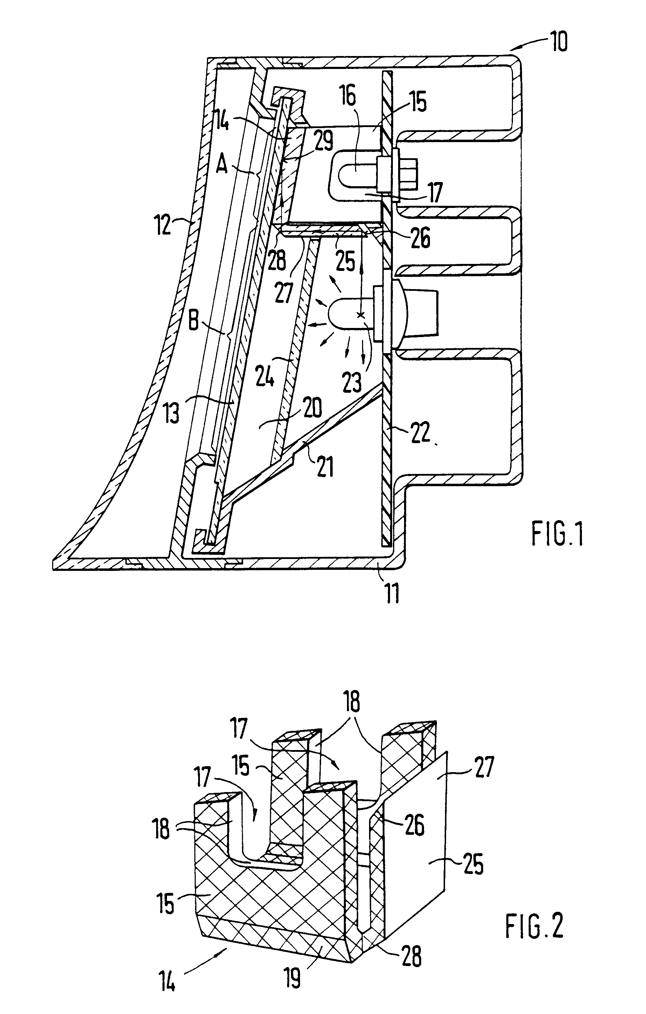

Drei Ausführungsbeispiele der Erfindung sind in der Zeichnung dargestellt und in der nachfolgenden Beschreibung näher erläutert. Es zeigen Figur 1 ein LCD-Anzeigegerät im Querschnitt mit zwei verschiedenfarbigen Bereichen der LCD und einem Lichtleiter hinter einem der beiden Bereiche, Figur 2 zeigt den Lichtleiter aus Figur 1 in vergrößerter, raumbildlicher Darstellung.

Beschreibung der Ausführungsbeispiele

In Figur 1 ist ein Anzeigegerät für ein Kraftfahrzeug mit einer Flüssigkristall-Großanzeige mit 10 bezeichnet. Ein mehrteiliges Gehäuse 11 trägt vorn eine transparente Abdeckscheibe 12, hinter der eine transmissive Flüssigkristallzelle 13 mit dem üblichen, bekannten Aufbau im Gehäuse 11 eingefaßt ist. Die Flüssigkristallzelle 13 hat zwei nebeneinander bzw. übereinanderliegende Bereiche A und B, die mit unterschiedlicher Farbgebung in den verschiedenen angesteuerten Segmenten ausgeleuchtet werden sollen. Durch die angesteuerten Segmente der Flüssigkristallzelle 12 sollen Schriftzeichen, Symbole und Anzeigen realisiert werden, wobei der obere Bereich A zur Anzeige verschiedener Funktionen und Zustände dient, die zu überwachen sind und über eine nicht dargestellte Elektronik ständig bzw. beim Auftreten von Störungen zur Anzeige gebracht werden. Der Bereich B dient zur Anzeige weiterer Daten, Skalen und dgl., deren Segmente in entsprechender Weise von der Elektronik angesteuert werden. An der Rückseite der Flüssigkristallzelle 13 ist im oberen Bereich A ein über diesen Bereich reichender Lichtleiter 14 angeordnet, der in Figur 2 in raumbildlicher Darstellung und vergrößertem Maßstab dargestellt ist. Der Lichtleiter 14 hat an seinen gegenüberliegenden Seiten zwei von der Flüssigkristallzelle 13 weggerichtete Fortsätze 15, an deren hinteren Endbereichen zwei mit Abstand nebeneinander im Anzeigegerät 10 angeordnete, verschieden farbige Glühlampen 16 so positioniert sind, daß jede der Glühlampen in einer U-förmigen Ausnehmung 17 der Fortsätze 15 hineinragt. Während die vordere, in Figur 1 erkennbare Glühlampe 16 rotes Licht abgibt, gibt die mit Abstand dahinter angeordnete, in Figur 1 nicht erkennbare Glühlampe 16 für den zweiten Fortsatz 15 grünes Licht ab. Die Lampen sind umschaltbar, so daß bei der Anzeige normaler Funktionen im Bereich A der Flüssigkristallzelle 13 die grüne Glühlampe 16 und beim Auftreten von Störungen die rote Glühlampe 16 eingeschaltet wird. Das Licht der Glühlampen 16 tritt an den Einkoppelflächen 18 im Bereich der U-förmigen Ausnehmung 17 am hinteren Endbereich des Lichtleiters 14 ein. Es wird dann über eine Abschrägung 19 des Lichtleiters 14 so umgelenkt, daß es an seinem vorderen Endbereich, der hinter der Flüssigkristallzelle 13 angeordnet ist, an der zur Flüssigkristallzelle 13 hin gerichteten Oberfläche gleichmäßig verteilt austritt.

Neben bzw. unterhalb des vom Lichtleiter 14 abgedeckten Bereiches A der Flüssigkristallzelle 13 ist hinter dem Bereich B der Flüssigkristallzelle 13 ein Lichtschacht 20, dessen Seitenwände 21 als Reflektor dienen und dessen Boden durch eine Isolierstoffplatte 22 gebildet ist, die eine weitere Glühlampe 23 trägt. Diese vorzugsweise weiße Glühlampe 23 soll den Bereich B der Flüssigkristallzelle 13 gleichmäßig ausleuchten. Dazu ist im Lichtschacht 20 eine gegebenenfalls gelb, orange oder mit einer anderen Kontrastfarbe eingefärbte Streufolie 24 bzw. eine entsprechend eingefärbte fluoreszierende Scheibe angeordnet, die an der Rückseite in an sich bekannter Weise mit einem Rasterdruck aus einem lichtundurchlässigen Material zur gleichmäßigen Ausleuchtung der Flüssigkristallzelle 13 innerhalb des Bereichs B versehen werden kann. Um auch bei ausgeschalteten Glühlampen 16 eine gleichmäßige Grundhelligkeit der Flüssigkristallzelle 13 in den nicht angesteuerten Flächenbereichen zu erzielen, ist der Lichtleiter 14 hinter dem Bereich A der Flüssigkristallzelle 13 mit einem weiteren Fortsatz 25 versehen, der in den Lichtschacht 20 ragt und am hinteren Endbereich eine weitere Abschrägung 26 aufweist. Der Fortsatz 25 hat zur Glühlampe 23 im Lichtschacht 20 eine große Einkoppelfläche 27, an welche ein Teil des Lichtes der Glühlampe 23 in den Lichtleiter 14 eintritt. Über die Abschrägung 26 sowie über eine weitere Abschrägung 28 vorn am Fortsatz 25 wird - wie in Figur durch Pfeile angedeutet - ein Teil des Lichtes der Glühlampe 23 zum Bereich A der Flüssigkristallzelle gelenkt, wo es gleichmäßig an der zu Bereich A hin gerichteten Oberfläche des Lichtleiters 14 als Auskoppelfläche 29 austritt. Um eine möglichst gute und gleichmäßige Ausleuchtung des Bereiches A der Flüssigkristallzelle 13 zu bekommen, ist der Lichtleiter 14 mit Ausnahme der Einkoppelflächen 18 und 27 und der Auskoppelfläche 29 des Lichtes hinter dem Bereich A der Flüssigkristallzelle 13 mit einer reflektierenden Schicht bedampft. Die gleichmäßige Auskopplung des Lichtes an der Fläche 29 kann auch durch einen Rasterfarbdruck an der Rückseite des Lichtleiters 14 erreicht werden.

Die Erfindung ist nicht auf eine bestimmte Ausführungsform des Lichtleiters bzw. der Lichtleiter hinter der Flüssigkristallzelle beschränkte. Auch die Anordnung der verschiedenen Glühlampen müssen nicht innerhalb des Anzeigegerätes liegen. Vielmehr kann der Lichtleiter, der für mindestens einen der Bereiche der Flüssigkristallzelle vorgesehen ist, auch aus dem Anzeigegerät herausführen, so daß es möglich ist, eine farbige Lichtquelle zur Ausleuchtung dieses Bereiches der Flüssigkristallzelle außerhalb des Anzeigegerätes an einem leicht zugänglichen Platz anzubringen, um auf diese Weise ein sehr flachbauendes Anzeigegerät zu realisieren und das Auswechseln einer defekten Lichtquelle zu erleichtern. Außerdem kann durch Auswechseln der Lichtquelle jederzeit eine andere Farbgebung für den dem Lichtleiter zugeordneten Bereich der Flüssigkristallanzeige realisiert bzw. frei gewählt werden. Ferner ist es möglich, im Rahmen der vorliegenden Erfindung zwischen dem Lichtleiter und der Flüssigkristallzelle wahlweise eine Streufolie, eine fluoreszierende Scheibe, ein Filter und/oder einen Polarisator anzubringen. Der Lichtleiter wird jeweils so gestaltet, daß das in ihm eintretende farbige Licht nur aus der Oberfläche austritt, die hinter dem ihm zugeordneten Bereich der Flüssigkristallzelle liegt, wogegen der Austritt des farbigen Lichtes auf den benachbarten Bereich der Flüssigkristallzelle durch Totalreflexion oder Beschichtung des Lichtleiters verhindert wird. Je nach Ausführung sind ein, zwei oder mehr umschaltbare Farbgebungen bei der Ausleuchtung des dem Lichtleiter zugeordneten Bereiches der Flüssigkristallzelle möglich.

**Patentansprüche**

1. Anzeigegerät (10) für Meßwerte, Funktions-, Zustands- oder Störanzeigen auf mindestens einer transmissiven Flüssigkristallzelle (13), vorzugsweise im Kraftfahrzeug, wobei die Flüssigkristallzelle eine rückwärtige Ausleuchtung aufweist, durch welche Bereiche (A, B) mit unterschiedlicher Farbgebung der Schriften, Symbole bzw. Anzeigen beleuchtet sind, in dem an der Rückseite der Flüssigkristallzelle (13) mindestens einer der Bereiche (A, B) mit unterschiedlicher Farbgebung einen über diesen Bereich (A) reichenden Lichtleiter (14) aufweist, der das Licht mindestens einer an einem Endbereich (18) des Lichtleiters (14) angeordneten Lichtquelle (16) an seiner zur Flüssigkristallzelle (13) hin gerichteten Oberfläche (29) auskoppelt, dadurch gekennzeichnet, daß die Lichtquelle (16) farbiges Licht an dem Endbereich (18) des Lichtleiters einkoppelt und daß an einer weiteren Lichteinkoppelfläche (27) des Lichtleiters (14) für eine gleichmäßige Grundhelligkeit der Flüssigkristallzelle (13) von einer weiteren Lichtquelle (23), die in einem neben dem Lichtleiter (14) hinter der Flüssigkristallzelle (13) liegenden Lichtschacht (20) angeordnet ist, ein Teil des Lichtes in den Lichtleiter (14) eintritt und an dem vom Lichtleiter (14) abgedeckten Bereich (A) der Flüssigkristallzelle (13) wieder austritt.

2. Anzeigegerät nach Anspruch 1, dadurch gekennzeichnet, daß an mindestens einem Endbereich des Lichtleiters (14) Lichtquellen (16) unterschiedlicher Farbe angeordnet und getrennt voneinander einschaltbar sind.

3. Anzeigegerät nach Anspruch 1 oder 2, dadurch gekennzeichnet, daß der Lichtleiter (14) an zwei gegenüberliegenden Seiten von der Flüssigkristallzelle (13) weggerichtete Fortsätze (15) aufweist, an deren Endbereichen jeweils eine verschiedenfarbige Glühlampe (16) angeordnet ist.

4. Anzeigegerät nach Anspruch 3, dadurch gekennzeichnet, daß die Glühlampen (16) jeweils in eine U-förmige Ausnehmung (17) der Fortsätze (15) hineinragen.

5. Anzeigegerät nach einem der Ansprüche 1 bis 4, dadurch gekennzeichnet, daß die in dem Lichtschacht (20) hinter der Flüssigkristallzelle (13) angeordnete weitere Lichtquelle eine Glühlampe (23) ist, die einen neben dem vom Lichtleiter (14) abgedeckten Bereich (A) der Flüssigkristallzelle (13) liegenden Bereich (B) ausleuchtet.

6. Anzeigegerät nach Anspruch 5, dadurch gekennzeichnet, daß für eine gleichmäßige Grundhelligkeit der Flüssigkristallzelle (13) der in den Lichtleiter (14) eingekoppelte Teil des Lichtes von der Glühlampe (23) im Lichtschacht (20) an einer Abschrägung (26) in einem hinteren Endbereich eines Fortsatzes (25) des Lichtleiters (14) eintritt.

7. Anzeigegerät nach einem der vorherigen Ansprüche, dadurch gekennzeichnet, daß der Lichtleiter (14) mit Ausnahme der Einkoppel- und Auskoppelflächen des Lichtes mit einer reflektierenden Schicht bedeckt ist.

8. Anzeigegerät nach einem der vorherigen Ansprüche, dadurch gekennzeichnet, daß zwischen der Flüssigkristallzelle (13) und dem Lichtleiter (14) mindestens ein lichtdurchlässiger Körper zur gleichmäßigen Ausleuchtung der Flüssigkristallzelle angeordnet ist.

## Claims

1. Display device (10) for measured values, function, status or fault displays on at least one transmissive liquid-crystal cell (13), preferably in a motor vehicle, the liquid-crystal cell having a rear illumination, by which areas (A, B) with different colouring of the characters, symbols or displays are illuminated, in which, on the rear side of the liquid-crystal cell (13), at least one of the areas (A, B) with different colouring has a light guide (14) which extends over this area (A) and couples out the light of at least one light source (16), arranged at an end area (18) of the light guide (14), at its surface (29) directed towards the liquid-crystal cell (13), characterised in that the light source (16) couples in coloured light at the end area (18) of the light guide and in that, for a uniform background brightness of the liquid-crystal cell (13), part of the light from a further light source (23), which is arranged in a light shaft (20) lying next to the light guide (14) behind the liquid-crystal cell (13), enters into the light guide (14) at a further light coupling-in surface (27) of the light guide (14) and leaves again at the area (A) of the liquid-crystal cell (13) covered by the light guide (14).

2. Display device according to Claim 1, characterised in that light sources (16) of different colour are arranged at at least one end area of the light guide (14) and can be switched on separately from one another.

3. Display device according to Claim 1 or 2, characterised in that the light guide (14) has on two opposite sides continuations (15) which are directed away from the liquid-crystal cell (13) and at the end areas of which a differently coloured incandescent lamp (16) is arranged in each case.

4. Display device according to Claim 3, characterised in that the incandescent lamps (16) in each case protrude into a U-shaped recess (17) of the continuations (15).

5. Display device according to one of Claims 1 to 4, characterised in that the further light source arranged in the light shaft (20) behind the liquid-crystal cell (13) is an incandescent lamp (23), which illuminates an area (B) lying next to the area (A) of the liquid-crystal cell (13) covered by the light guide (14).

6. Display device according to Claim 5, characterised in that, for a uniform background brightness of the liquid-crystal cell (13), the part of the light coupled into the light guide (14) from the incandescent lamp (23) in the light shaft (20) enters at a bevel (26) in a rear end area of a continuation (25) of the light guide (14).

7. Display device according to one of the preceding claims, characterised in that the light guide (14) is covered by a reflective layer, with the exception of the coupling-in and coupling-out surfaces of the light.

8. Display device according to one of the preceding claims, characterised in that between the liquid-crystal cell (13) and the light guide (14) there is arranged at least one opaque body for uniform illumination of the liquid-crystal cell.

## Revendications

1. Appareil indicateur (10) de valeurs, fonctions, états ou incidents, de préférence pour véhicule à moteur, comportant au moins une cellule transmissive à cristaux liquides (13) présentant une illumination par l'arrière qui éclaire deux zones (A et B), avec des colorations différentes, des chiffres, symboles ou autres indicateurs, au moins une de ces zones à colorations différentes étant équipée d'un guide de lumière qui couvre cette zone (A), en arrière de la cellule (13) et qui transmet par sa surface (29) en regard de la platine (13) de lumière, au moins une source lumineuse (16) disposée à une extrémité (18), du guide de lumière (14), caractérisé en ce que la source lumineuse (16) fournit une lumière colorée à l'extrémité (18) du guide de lumière, tandis qu'à travers une autre surface de réception (27) du guide de lumière, afin de donner à la cellule (13) un fond éclairé uniformément, une partie de la lumière émise par une autre source lumineuse (23) disposée dans un puits de lumière derrière la cellule et à côté du guide de lumière (14), pénètre dans celui-ci qui la transmet à la roue (A) de la cellule couverte par le guide de lumière (14).

2. Appareil indicateur selon la revendication 1, caractérisé en ce que des sources lumineuses (16) de couleurs différentes, commandables séparément, sont disposées à au moins une extrémité du guide de lumière.

3. Appareil indicateur selon la revendication 1 ou 2, caractérisé en ce que le guide de lumière présente, sur deux côtés opposés et tournant le dos à la cellule (13) des prolongements (15) près des extrémités desquelles sont respectivement disposées des lampes (16) de couleurs différentes.

4. Appareil indicateur selon la revendication 3, caractérisé en ce que chacune des lampes (16) pénètre dans un évidement (17) en forme de U, pratiqué dans le prolongement (15).

5. Appareil indicateur selon une des revendications 1 à 4, caractérisé en ce que la source lumineuse (20) disposée à l'intérieur du puits de lumière (20) derrière la cellule (13) est une lampe (23) qui illumine une zone (B) contiguë à une zone (A) de la cellule (13), couverte par le guide de lumière (14).

6. Appareil indicateur selon la revendication 5, caractérisé en ce que pour donner au fond de la cellule (13) un éclairement uniforme, la partie de la lumière fournie au guide de lumière (14) par la lampe (23) située dans le puits de lumière (20) pénètre dans ce conducteur en regard d'une face oblique (26) située à l'extrémité arrière d'un prolongement (25) du guide de lumière (14).

7. Appareil indicateur selon une des revendications précédentes, caractérisé en ce que le guide de lumière, en dehors des zones d'entrée et de sortie de la lumière, est recouvert d'une couche réfléchissante.

8. Appareil indicateur selon une des revendications précédentes, caractérisé en ce qu'au moins un élément translucide est disposé entre le guide de lumière (14) et la cellule à cristaux liquides (13), pour donner un éclairement uniforme à celle-ci.

FIG.1

FIG.2